# EUROPEAN PATENT SPECIFICATION

(11) **EP 4 535 818 B1**
(45) Date of publication and mention of the grant of the patent: **29.04.2026**
(21) Application number: 23201218.7
(22) Date of filing: 02.10.2023
(51) Int. Cl.: H04Q 11/00

(54) **A METHOD FOR COLLECTING DATA AT AN ONU OF AN OPTICAL DISTRIBUTION NETWORK**
VERFAHREN ZUM SAMMELN VON DATEN AN EINER ONU EINES OPTISCHEN VERTEILUNGSNETZWERKS
PROCÉDÉ DE COLLECTE DE DONNÉES AU NIVEAU D'UNE UNITÉ ONU D'UN RÉSEAU DE DISTRIBUTION OPTIQUE

(43) Date of publication of application: 09.04.2025
(73) Proprietor: Nokia Solutions and Networks Oy, 02610 Espoo (FI)
(72) Inventor: Sanguinetti, Alain, 2600 Berchem (BE)
(74) Representative: Loyer & Abello

(56) References cited:
- US-A1- 2007 064 731
- DENIS KHOTIMSKY MOTOROLA USA: "XG-PON Transmission Convergence layer specification;TD", ITU-T DRAFT ; STUDY PERIOD 2009-2012, INTERNATIONAL TELECOMMUNICATION UNION, GENEVA ; CH, vol. Q2, 29 September 2010 (2010-09-29), pages 1 - 115, XP017569210

## Description

### Field of the invention

The disclosure relates to apparatuses and methods for collecting data in a downstream frame, at an ONU of an optical distribution network.

In particular, the disclosure relates to apparatuses and methods for monitoring the bandwidth allocation granted in an optical distribution network.

### Definitions

For a better understanding of the context of the invention, few definitions from the ITU-T G.984.4 norm are listed hereafter. In the disclosure, the following definitions applied for any passive optical network including, but not restricted to, gigabit-capable passive optical network.

bandwidth allocation: An upstream transmission opportunity granted by the optical line termination (OLT) for the duration of the specified time interval to the specified traffic-bearing entity, also called T-CONT, within an optical network unit (ONU).

dynamic bandwidth assignment (DBA): A process by which the optical line termination (OLT) distributes the upstream passive optical network (PON) capacity between the traffic-bearing entities within optical network units (ONUs), based on the dynamic indication of their activity status and their configured traffic contracts.

gigabit-capable passive optical network (G-PON): A variant of the passive optical network (PON) access technology supporting transmission rates in excess of 1 Gbit/s and based on the G.984-series of ITU-T Recommendations.

G-PON transmission convergence (GTC) layer: A protocol layer of the G-PON protocol suite that is positioned between the physical media dependent (PMD) layer and the G-PON clients. The G-PON transmission convergence (GTC) layer is composed of GTC framing sublayer and GTC adaptation sublayer.

GTC adaptation sublayer: A sublayer of the gigabit-capable passive optical network (G-PON) transmission convergence layer that supports the functions of user data fragmentation and de-fragmentation, gigabit-capable passive optical network encapsulation method (GEM) encapsulation, GEM frame delineation and GEM Port-ID filtering.

GTC framing sublayer: A sublayer of the gigabit-capable passive optical network (G-PON) transmission convergence layer that supports the functions of G-PON transmission convergence (GTC) frame/burst encapsulation and delineation, embedded operation, administration and maintenance (OAM) processing and allocation identifier (Alloc-ID) filtering.

optical access network (OAN): A set of access links sharing the same network-side interfaces and supported by optical access transmission systems. The OAN may include a number of optical distribution networks (ODNs) connected to the same optical line termination (OLT).

optical distribution network (ODN): In the passive optical network (PON) context, a tree of optical fibers in the access network, supplemented with power or wavelength splitters, filters or other passive optical devices.

optical line termination (OLT): A device that terminates the common (root) endpoint of an optical distribution network (ODN), implements a passive optical network (PON) protocol, such as that defined by [ITU-T G.984.1] and adapts PON protocol data units (PDUs) for uplink communications over the provider service interface. The optical line termination (OLT) provides management and maintenance functions for the subtended ODN and optical network units (ONUs).

optical network termination (ONT): A single-subscriber device that terminates any one of the distributed (leaf) endpoints of an optical distribution network (ODN), implements a passive optical network (PON) protocol and adapts PON protocol data units (PDUs) to subscriber service interfaces. An ONT is a special case of an optical network unit (ONU).

optical network unit (ONU): A generic term denoting a device that terminates any one of the distributed (leaf) endpoints of an optical distribution network (ODN), implements a passive optical network (PON) protocol and adapts PON protocol data units (PDUs) to subscriber service interfaces. In some contexts, an ONU implies a multiple subscriber device.

physical layer OAM (PLOAM): A message-based operation and management channel between the optical line termination (OLT) and the optical network units (ONUs) that supports the PON TC-layer management functions, including ONU activation, ONU management and control channel (OMCC) establishment, encryption configuration, key management and alarm signaling.
PDU : Protocol Data Unit
GEM : Gigabit-capable passive optical network Encapsulation Method
GTC : Gigabit-capable passive optical network Transmission Convergence
OAM : Operation, Administration and Maintenance
PLOAM : Physical Layer OAM Operations, Administrations and Maintenance

### Background

A passive optical network (PON) is a fiber-optic telecommunications technology for delivering broadband network access to end-customers.

Its architecture implements a point-to-multipoint topology in which a single optical fiber serves multiple endpoints by using unpowered (passive) fiber optic splitters to divide the fiber bandwidth among the endpoints.

In the downstream direction, the traffic multiplexing functionality is centralized. The OLT multiplexes the frames onto the transmission medium using Port-ID as a key to identify the frames that belong to different downstream logical connections. Each ONU filters the downstream frames based on their Port-IDs and processes only the frames that belong to that ONU.

In the upstream direction, the traffic multiplexing functionality is distributed. The OLT grants upstream transmission opportunities, or upstream bandwidth allocations, to the traffic-bearing entities within the subtending ONUs. The ONU's traffic-bearing entities that are recipients of the upstream bandwidth allocations are identified by their allocation IDs (Alloc-IDs). The bandwidth allocations to different Alloc-IDs are multiplexed in time as specified by the OLT in the bandwidth maps transmitted downstream. Within each bandwidth allocation, the ONU uses the Port-ID as a multiplexing key to identify the frames that belong to different upstream logical connections.

In other words, due to the topology of PON, the transmission modes for downstream (that is, from OLT to ONU) and upstream (that is, from ONU to OLT) are different. For the downstream transmission, the OLT broadcasts optical signal to all the ONUs in continuous mode, that is, the downstream channel always has optical data signal. However, in the upstream channel, ONUs cannot transmit optical data signal in CM. Use of a continuous mode would result in all of the signals transmitted from the ONUs converging (with attenuation) into one fiber by the power splitter (serving as power coupler), and overlapping. To solve this problem, burst mode (BM) transmission is adopted for upstream channel. The given ONU only transmits optical packet when it is allocated a time slot and it needs to transmit, and all the ONUs share the upstream channel in the time-division multiplexing (TDM) mode.

The OLT is responsible for dynamically computing and assigning the time slots to the different alloc-ids (the transport container for data, several per ONU) of the ONUs on the PON.

The OLT sends the time slots in a structure called "bandwidth maps" (BWmaps).

The bandwidths maps are embedded in the header of the downstream frames at the transmission convergence layer.

Each ONU parse the whole header and look for its alloc-ids and then knows when to send data at the correct time slots.

During the development of new boards, especially with new technologies, a big part of the bring-up and the following debug process involve checking the values of those headers.

Also, the bandwidths maps and their generation define the behavior of the PON in all scenarios: reactivity to surge in upstream traffic, fairness during congestion, ranging, etc. Being able to study them in real time on dynamic scenarios and develop appropriate algorithms is a key enabler to bring more value in the OLTs.

However, it is still difficult to have a direct and easy access to the bandwidths maps.

Several problems are still pending:
- In order to debug new technologies (ex 25G), there is simply no specialized equipment to read those headers available. So, for now, the setting up of the transport layer of new optical fiber technologies are operated "in the dark", by looking at effects and retro engineering the values that create those effects instead of simply reading the values.
- Known equipment for new technologies are very expensive anyway and difficult to procure in useful numbers.
- Known equipment for current technologies (gpon and xgspon in particular) are available but very specialized and not very extensible to obtain a direct image or retransmission of the bandwidth maps. Indeed, known equipment for current technologies are using onboard processing to record the header values and present a summary to the user via a graphic interface. The amount of headers that can be captured is defined by the equipment. However, this presentation is not realized continuously, i.e. live, and the amount of headers that can be captured is limited.

Thus, there is a need for apparatuses and methods to have a direct and easy access to the bandwidths maps.

### Summary

Apparatuses and methods for collecting data packets in a downstream frame, at an ONU of an optical distribution network are disclosed.

In some embodiments, the disclosure provides a method for collecting data, the method comprising, at an ONU of an optical distribution network:
receiving downstream data packets in a downstream frame,
each downstream data packet including a layer-2 header comprising at least upstream transmission opportunities and corresponding Alloc-ID's,
wherein each Alloc-ID identifies a T-CONT of an ONU of the optical distribution network,
wherein the upstream transmission opportunities define upstream bandwidth allocation for the T-CONT of the ONU;
extracting at least part of the upstream transmission opportunities and their corresponding Alloc- IDs from the layer-2 headers; and
collecting the at least part of the upstream transmission opportunities and the corresponding Alloc-ID for transmission as a layer-3 output payload.

Thanks to these features, the method enables to collect the upstream transmission opportunities. This collect can then be used to analyze the bandwidth allocation in a cheaper and easy way without the requirements of any additional device.

Another way to figure it out is that the method allows duplicating the upstream transmission opportunities granted by the OLT for all the ONUs of an ODN at one ONU of this ODN.

A upstream bandwidth allocation is a time period during which an ONU - identified by its Alloc-ID - can send data in an upstream direction of the optical distribution network.

This method may also comprise one or more of the following features.

In an embodiment, the method is implemented for each downstream frame at a nominal bit rate comprised between 120 µs and 130 µs.

Thanks to this feature, the collecting and, then the analyzing, is done onboard or live. It is therefore possible to detect and solve issues faster.

In an embodiment, the upstream transmission opportunities comprise upstream bandwidth management information and/or dynamic bandwidth assignment.

In an embodiment, the method further comprises a step of transmitting the layer-3 output payload to a user output port of the ONU for being further processed e.g. by a computer coupled to the ONU.

In an embodiment, the layer-3 output payload is an Ethernet packet payload.

Generally, the Ethernet packet is a standard encapsulation format so the upstream transmission opportunities can be transmitted as any payload encapsulated in this standard format.

In an embodiment, the optical distribution network is a G-PON, for example an XGS-PON and the layer-2 is a transmission convergence layer.

In an embodiment, the layer-2 is a transmission convergence layer comprising three sublayers:
- A service adaptation sublayer
- A framing sublayer
- A PHY adaptation sublayer;
and the received layer-2 headers are part of the framing sublayer.

In an embodiment, the method further comprises determining that an Alloc-ID comprised in a layer-2 header is a activation Alloc-ID and send the upstream transmission opportunities as a layer-3 output payload to an OLT of the optical distribution network.

Thanks to these features, it is easier to collect the transmission opportunities as they are in a frame comprising a same, unique and dedicated header relative to the activation Alloc-ID. The golden ONU mode could therefore be activated remotely by the reception of the activation Alloc-ID.

In an embodiment, the method comprises a step of storing the layer-3 output payload in a memory of the ONU.

In an embodiment, the method further comprises:
- running a checking routine on the upstream transmission opportunities collected, wherein the checking routine at least comprises searching for mathematical errors in the upstream transmission opportunities collected.

Indeed, as the received upstream transmission opportunities can be collected as useful data, it is then possible to process them. A useful processing is to observe the bandwidth maps send by the OLT to the ONUs of the network. This parsing can be implemented live or with a periodic update. It is then possible to analyze the bandwidth maps and detect issues in the OLT.

In an embodiment, the optical distribution network is part of a mobile network, wherein the upstream transmission opportunities define target bandwidth allocated to a mobile antenna at a time point, and the method further comprises:
- comparing the target bandwidth allocated to the mobile antenna to a required bandwidth for the mobile antenna at the timepoint.

In an embodiment, the method further comprises :
- encapsulating the layer-3 output payload as payload in an upstream packet and
- transmitting the upstream packet in the upstream direction over the optical distribution network to an optical line termination (OLT) for checking the layer-3 output payload at the OLT.

Indeed, the processing of the upstream transmission opportunities extracted and collected can be done at the OLT level or higher. The OLT has better computing power so more advanced checks can be implemented of the upstream transmission opportunities collected. Statistics about the bandwidth maps can be recorded and used for monitoring.

In an embodiment, the method further comprises a step of transmitting the layer-3 output payload to a user output port of the ONU for being further processed e.g. by a computer coupled to the ONU.

In some embodiments, the disclosure provides an apparatus comprising means for:
- receiving downstream data packets in a downstream frame,
- each downstream data packet including a layer-2 header comprising at least upstream transmission opportunities and corresponding Alloc-ID's,
   wherein each Alloc-ID identifies a T-CONT of an ONU of the optical distribution network,
   wherein the upstream transmission opportunities define upstream bandwidth allocation for the T-CONT of the ONU;
- extracting at least part of the upstream transmission opportunities and their corresponding Alloc- ID from the layer-2 headers; and
- collecting the at least part of the upstream transmission opportunities and the corresponding Alloc-ID for transmission as a layer-3 output payload.

In some example embodiments, the means in the apparatus further comprises:
- At least one processor; and
- At least one memory including a computer program code, the at least one memory and computer program code configured to, with the at least one processor, cause the operations of the apparatus.

The at least one memory and the computer program code may be configured to, with the at least one processor, cause the apparatus to:
- store the layer-3 output payload in a memory of the network element.

The at least one memory and the computer program code may be configured to, with the at least one processor, cause the apparatus to:
- determine that an Alloc-ID comprised in a layer-2 header is a activation Alloc-ID and send the upstream transmission opportunities as a layer-3 output payload to the OLT.

Any other specific operation can be implemented by the at least one processor.

The at least one memory and the computer program code may be configured to, with the at least one processor, cause the apparatus to:
- transmit the layer-3 output payload to a user output port of the network element for being further processed e.g. by a computer coupled to the network element.

The at least one memory and the computer program code may be configured to, with the at least one processor, cause the apparatus to:
- encapsulate the layer-3 output payload as payload in an upstream packet and
- transmit the layer-3 output payload in the upstream direction over the optical distribution network to an optical line termination (OLT) for being checked at the OLT.

The at least one memory and the computer program code may be configured to, with the at least one processor, cause the apparatus to:
- checking the layer-3 output payload comprising the upstream transmission opportunities in real time e.g. upon mathematical errors, and/or
- detecting errors in the upstream transmission opportunities.

In an embodiment, the optical distribution network is part of a mobile network, wherein the upstream transmission opportunities define target bandwidth allocated to a mobile antenna at a time point, and the at least one memory and the computer program code may be configured to, with the at least one processor, cause the apparatus to:
- compare the target bandwidth allocated to the mobile antenna to a required bandwidth for the mobile antenna at the time point.

In some example embodiments, the disclosure also provides an apparatus comprising:
A first receiving circuitry configured to receive downstream data packets in a downstream frame,
each downstream data packet including a layer-2 header comprising at least upstream transmission opportunities and corresponding Alloc-ID's,
wherein each Alloc-ID identifies a T-CONT of an ONU of the optical distribution network,
wherein the upstream transmission opportunities define upstream bandwidth allocation for the T-CONT of the ONU;
a first extracting circuitry configured to extract at least part of the upstream transmission opportunities and their corresponding Alloc- IDs from the layer-2 headers; and
a first collecting circuitry configured to collect the at least part of the upstream transmission opportunities and the corresponding Alloc-ID as a layer-3 output payload.

In some embodiments, the disclosure also provides an apparatus comprising a first executing circuitry configured to execute periodically at a time period comprised between 120 µs and 130 µs the method.

In some embodiments, the disclosure also provides an apparatus comprising:
- a first storing circuitry configured to store the layer-3 output payload in a memory of the apparatus.

In some embodiments, the disclosure also provides an apparatus comprising:
A first transmitting circuitry configured to transmit the layer-3 output payload to a user output port of the apparatus for being further processed e.g. by a computer coupled to the apparatus.

In some embodiments, the disclosure also provides an apparatus comprising:
- A first encapsulating circuitry configured to encapsulate the layer-3 output payload as payload in an upstream packet and
- a second transmitting circuitry configured to transmit the upstream packet in the upstream direction over the optical distribution network to an optical line termination (OLT) for checking the layer-3 output payload at the OLT.

In some embodiments, the optical distribution network is part of a mobile network, wherein the upstream transmission opportunities define target bandwidth allocated to a mobile antenna at a time point, and the disclosure also provides an apparatus comprising
- a first comparing circuitry configured to compare the target bandwidth allocated to the mobile antenna to a required bandwidth for the mobile antenna at the time point.

### Brief description of the drawings

For a more complete understanding of example embodiments of the present invention, reference is now made to the following descriptions taken in connection with the accompanying drawings in which:
FIG. 1 shows a functional diagram of a GPON network.
FIG. 2 depicts common functional view of the G-PON transmission convergence layer.
FIG. 3 shows a functional diagram of bandwidth maps granted to an ONU 1 by an OLT.
FIG. 4 shows a diagram of the downstream GTC frame structure.
FIG. 5 and 6 show diagrams of the information encoded in a BWmap.
FIG. 7 depicts a plurality of sublayers of a transmission convergence layer in a XGS-PON.
FIG. 8 is a block diagram depicting an apparatus 1200 operating in accordance with an example embodiment described above.
FIG. 9 depicts relationships between ONU/ONT, T-CONT and GEM ports.
FIG. 10 shows a sample model of downstream traffic management.
FIG. 11 shows a sample model of upstream traffic management.

### Detailed description of embodiments

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequences. Similarly, specific structural and functional details disclosed herein are merely representative for purposes of describing the embodiments. The invention described herein, however, may be embodied in many alternate forms and should not be construed as limited to only the embodiments set forth herein.

### General architecture of passive optic network

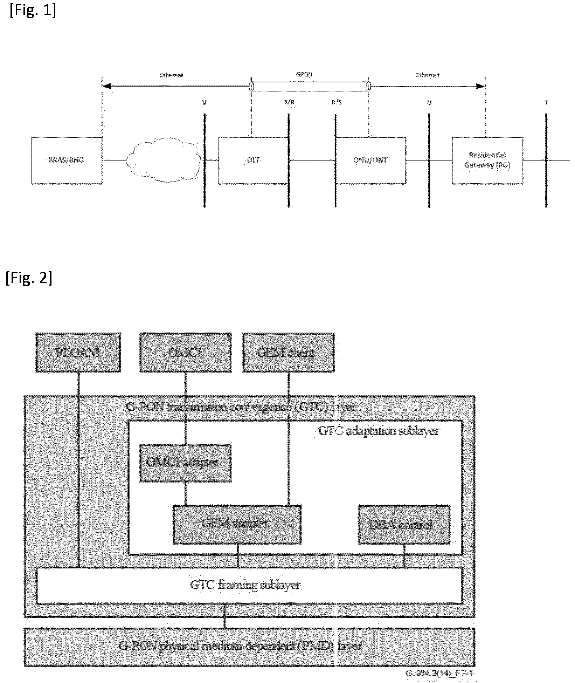

A schematic view of a GPON network is depicted at [Fig. 1]. A GPON network is a type of PON network. A passive optical network (PON) is a Level 1 fiber-optic transport principle used in fiber-to-the-home (FTTx) networks, characterized by a passive point-to-multipoint fiber architecture (several users share the same fiber, and there is no active equipment between the exchange and the subscribers).

In the downstream direction, the OLT supplies different ONUs via an ODN. In the upstream direction, the ONUs can send upstream information via the OLT.

The OLT is the first aggregation point in GPON access network. The OLT terminates the GPON Transmission Convergence (GTC) layer on the user side and forwards Ethernet frames to Ethernet layer on the network side. [Fig. 1] shows the termination points for ONU/ONT scenario.

The U reference point represents the customer-facing interface of the ONU/ONT. It is possible that the U reference point can be within the ONU/ONT device when ONT and RG devices are combined into a single device.

The R/S reference point represents the OLT facing ONT interface. The S/R reference point represents the Optical Distribution Network (ODN) connecting GPON interface on the OLT. The S/R and R/S interfaces contain all the protocol elements necessary to allow communication between OLT and one or more ONTs over ODN.

The V reference point represents the network-facing interface of the OLT.

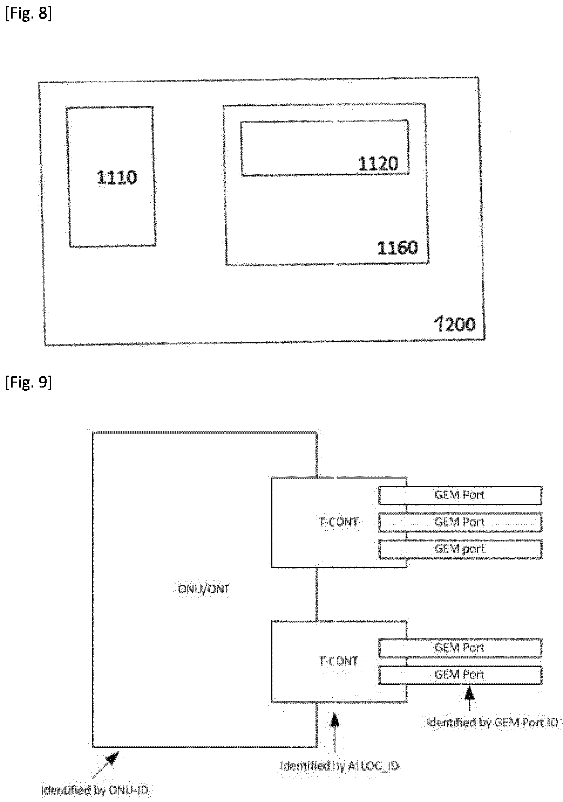

[Fig. 9] depicts relationships between ONU/ONT, T-CONT and GEM ports.

T-CONT: A traffic bearing object within an ONU/ONT that represents a group of logical connections, and is treated as a single entity for the purpose of upstream bandwidth assignment on the PON. In the upstream direction, it is used to bear the service traffic. Each T-CONT corresponds to a service traffic of one bandwidth type. Each bandwidth type has its own QoS feature.

ALLOC_ID: Each T-CONT is identified by the ALLOC_ID uniquely. The ALLOC_ID ranges from 0 to 4095. It is allocated by OLT i.e. a T-CONT can only be used by one ONU/ONT per PON interface on the OLT.

GEM Port: A GPON Encapsulation Method (GEM) port is a virtual port for performing GEM encapsulation for transmitting frames between the OLT and the ONU/ONT. Each different traffic-class (TC) per UNI is assigned a different GEM Port. Each T-CONT consists of one or more GEM Ports. Each GEM port bears one kind of service traffic i.e. a T-CONT type.

GEM Port ID: Each GEM Port is identified by a port ID uniquely. The Port ID ranges from 0 to 4095. It is allocated by the OLT i.e a GEM port can only be used by a single ONU/ONT per PON interface on the OLT.

Between the ONT and OLT is the ODN, and Ethernet frames are carried over it through the use of GEM Channels. GPON has GEM channels as part of its GTC layer. The GEM channels carry variable-length Ethernet frames. GEM channels are identified by GEM Port IDs. This identifier is assigned by OLT upon creation of a new channel and is only valid during the entire life-cycle of the channel. Each GPON interface for a given ONT can have several GEM Ports. A GEM Port ID is unique per GPON interface and represents a specific traffic or group of flows between the OLT and the ONT.

There are 2 types of GEM Channels:
Downstream-only GEM Channels - These channels are used to transmit downstream broadcast/multicast traffic from OLT to all ONTs. The ONTs identify traffic meant for them based on GEM Port ID.
Bi-directional GEM Channels - These channels are used for upstream and downstream traffic between the OLT and the ONT. The frames are transmitted from the OLT into the GPON interface and are forwarded only on the U interface of the ONT on which that GEM Port has been assigned.

GEM Ports are used to differentiate among traffic classes (TCs). A U interface may have several GEM Ports associated with it that support different TCs. Thus, within a GPON interface, each GEM Port carries one or more traffic flows associated with a specific TC.

On U interface, traffic is classified into VLANs with various Ethernet priorities based on: Physical Port, VLAN ID, 802.1p bits, &/or DSCP. Once the traffic has been assigned a VLAN and COS (802.1p) values, these two values are used to select an upstream GEM Port so that QoS can be applied to the flows carried by the GEM Port. A GEM Port always belongs to a single T-CONT. In downstream direction, the ONT forwards the traffic received by GEM Ports to appropriate U interface.

Different VLAN architecture can be used. For example, a 1:1 VLAN or N:1 VLAN can be used.

### Time division multiplexing architecture

For any passive optic network, for example G-PON or XGS-PON, the principles of time division multiplexing (TDM) and time division multiple access (TDMA) apply.

As seen from figure 1, the GPON link connects the OLT and ONTs to transport Ethernet services. Please note that GPON can also encapsulate ATM and TDM (E1, E3) services. The GTC Adaptation sublayer maps Ethernet frames into GPON GEM frames. A QoS mechanism is required in GEM to support Ethernet QoS (i.e. 802.1p bits). In order to provide QoS, two mechanisms are employed-
- Classification of traffic into traffic classes
- Forwarding the traffic classes into GEM Ports and T-CONTs configured to emulate Ethernet QoS service

In the downstream direction of a PON, the traffic multiplexing functionality is centralized. The OLT multiplexes frames onto the transmission medium using Port-ID as a key to identify frames that belong to different downstream logical connections. Each ONU filters the downstream frames based on their Port-IDs and processes only the frames that belong to that ONU. A multicast port can be used to carry frames to more than one ONU.

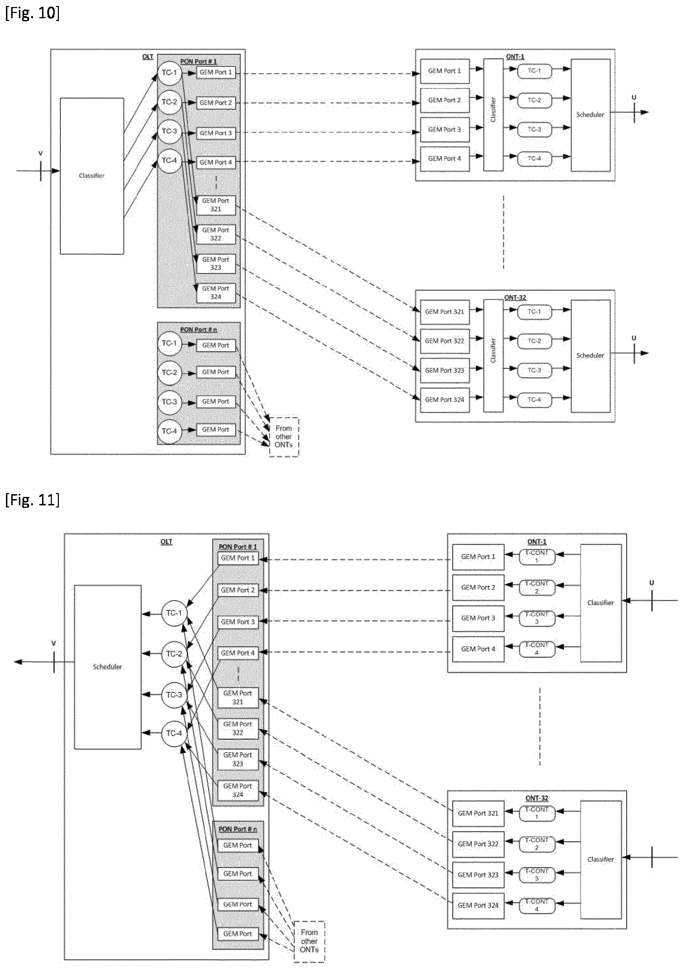

[Fig. 10] shows a sample model of downstream traffic management. In downstream direction, T-CONT is not used. Traffic received from the V interface at the OLT is assigned to queues according to the TCs. It is then transmitted in the downstream direction to the PON interface by using a scheduler. At the ONT, the traffic is classified again and placed into appropriate queues for each U interface. A scheduler is used to transmit frames to the U interface.

In the upstream direction of a PON, the traffic multiplexing functionality is distributed. The OLT grants upstream transmission opportunities, or upstream bandwidth allocations, to the traffic-bearing entities within the subtending ONUs. The ONU's traffic-bearing entities that are recipients of the upstream bandwidth allocations are identified by their allocation IDs (Alloc-IDs). Bandwidth allocations to different Alloc-IDs are multiplexed in time as specified by the OLT in the bandwidth maps transmitted downstream. Within each bandwidth allocation, the ONU uses the Port-ID as a multiplexing key to identify the frames that belong to different upstream logical connections.

[Fig. 11] shows a sample model of upstream traffic management. It shows 4 T-CONTs per PON interface where each T-CONT represents a specific traffic class (TC). The Classifier receives traffic from U interface and maps to queues as per configuration using associated GEM Ports. If a second UNI interface is present on the same ONT, it would also perform classification and map the traffic to TC(s). As mentioned above, a GEM Port must bear one or more T-CONTs. Other upstream traffic from other ONTs is mapped to other 4 T-CONTs according to the TC.

At the OLT, each TC is mapped into a separate queue. T-CONTs from various ONTs that share the same TC are mapped to the same queue, and a scheduler is used among the queues towards the network-facing port i.e. V interface.

### Protocol stack

The protocol stack or network stack is an implementation of a computer networking protocol suite or protocol family. Some of these terms are used interchangeably but strictly speaking, the suite is the definition of the communication protocols, and the stack is the software implementation of them.

Here the protocol suite is implemented thanks to different layers including a physical medium dependent (PMD) layer and a transmission convergence layer (called G-PON transmission convergence layer for the G-PON networks).

In other words, a layer-1 is the physical medium dependent (PMD) layer and a layer-2 is a transmission convergence layer (called G-PON transmission convergence layer for the G-PON networks).

[Fig. 2] depicts a common functional view of the G-PON transmission convergence layer.

The GTC layer is comprised of two sublayers, the GTC framing sublayer and the GTC adaptation sublayer. From another point of view, GTC consists of a control and management plane (C/M-plane), which manages user traffic flows, security and OAM features, and a user data plane (U-plane) which carries user traffic. In the GTC framing sublayer, GEM section, embedded OAM and PLOAM sections are recognized according to the location on a GTC frame. The embedded OAM is terminated at this sublayer for local control purposes, because information of embedded OAM is included in the GTC frame header directly. PLOAM information is processed at the PLOAM block located as a client of this sublayer. Service data units (SDUs) in GEM sections are converted from/to conventional GEM protocol data units (PDUs) at the GTC adaptation sublayer.

Moreover, these GEM PDUs carry the OMCI channel data. The OMCI channel data is recognized at the adaptation sublayer and is interchanged from/to OMCI entity. Embedded OAM, PLOAM and OMCI are categorized into the C/M-plane. SDUs, except for OMCI over GEM, are categorized into the U-Plane.

The GTC framing sublayer has global visibility to all data transmitted, and the OLT GTC Framing sublayer is a direct peer of all the ONU GTC framing sublayers.

Moreover, the DBA control block or DBA functional module is specified as a common functional block in the GTC adaptation sublayer.

### Downstream and upstream transmission

The OLT is required to transmit all pointers to any single ONU in ascending order of start time.

### Dynamic bandwidth assignment

Dynamic bandwidth assignment (DBA) in gigabit-capable passive optical networks (G-PON) is the process by which the optical line termination (OLT) reallocates the upstream transmission opportunities to the traffic-bearing entities within optical network units (ONUs) based on the dynamic indication of their activity status and their configured traffic contracts. The activity status indication can be either explicit through buffer status reporting, or implicit through transmission of idle GEM frames in place of granted upstream transmission opportunities.

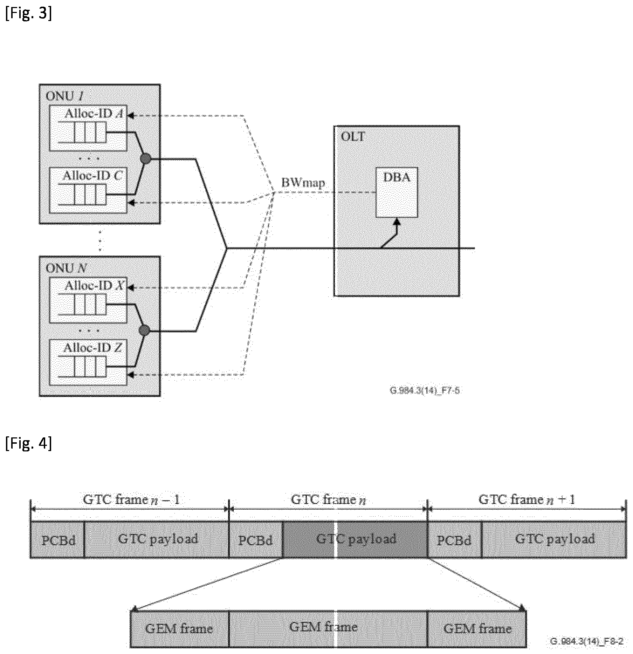

As illustrated at [Fig. 3], for each Alloc-ID logical buffer, the DBA functional module of the OLT infers the occupancy information either through collecting the inband status reports or by indirectly observing the upstream idle pattern. It then derives the allocation of bandwidth for each Alloc-ID based on those inputs, configuration and fairness requirements, and then provides the input to the OLT upstream bandwidth mapper that is responsible for generating the BWmaps at the frame rate. The BWmaps are communicated to the ONUs inband with the downstream traffic.

As an example, a diagram of the downstream GTC frame structure is shown in [Fig. 4]. For a XGS-PON 10G, the frame has a duration of 125 µs and is 38880 words long, which corresponds to the downstream data rate of 2.48832 Gbit/s. The PCBd length range depends on the number of allocation structures per frame.

However, the characteristics of the frame depend on the PON network. The frame can be different in the following PON : GPON, XGS, 2,5/XGS, 10G GHSP or 25G GHSP etc.

### Frame header and BWmap

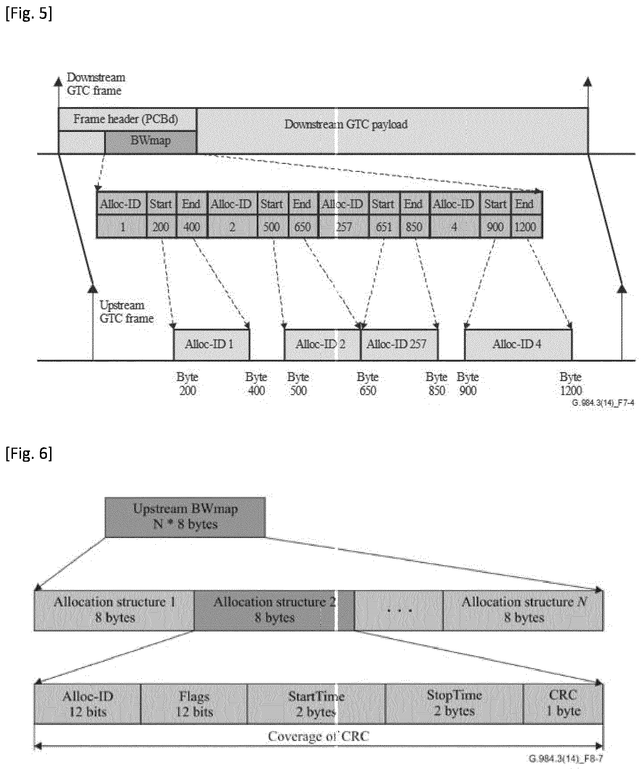

GTC system provides media access control for upstream traffic. In the basic concept, downstream frames indicate permitted locations for upstream traffic in upstream GTC frames synchronized with downstream GTC frames. The media access control concept in the GTC system is illustrated in [Fig. 5].

The OLT sends pointers in the upstream bandwidth map (BWmap) field of the downstream physical control block (PCBd), and these pointers indicate the time at which each ONU may begin and end its upstream transmission. In this way, only one ONU can access the medium at any time, and there is no contention in normal operation. The pointers are given in units of bytes, allowing the OLT to control the medium at an effective static bandwidth granularity of 64 kbit/s. However, some implementations of the OLT may choose to set the values of the pointers at a larger granularity, for example in words, and achieve fine bandwidth control via dynamic scheduling.

The bandwidth map (BWmap) is a scalar array of 8-byte allocation structures. Each entry in this array represents a single bandwidth allocation to a particular Alloc-ID. A bandwidth map comprises and defines one transmission opportunity per T-CONT of a ONU. In general, transmission opportunities for T-CONTs of a same ONU are grouped together as much as possible for PON efficiency but this is not mandatory.

The number of entries in the map is given in the PLend field. The format of each entry is given below and is shown in [Fig. 6].

The OLT is required to transmit all pointers to any single ONU in ascending order of start time. It is recommended that all pointers are transmitted in ascending order of start time. ONUs should be able to support up to eight allocation structures in any single BWmap and, optionally, could support more. Further, the maximum BWmap size limitation of an ONU should be at least 256 allocation structures, with larger BWmaps optionally supported.

The Allocation ID field contains the 12-bit number that indicates the recipient of the bandwidth allocation, i.e., a particular T-CONT or an upstream OMCC within an ONU. The 12-bit field is generally unstructured, but a few conventions apply. First, the lowest 254 allocation ID values are used to address the ONU directly. During the ranging procedure, the first Alloc-ID given to the ONU should be in this range. The first Alloc-ID given to the ONU is referred to as the default allocation ID. This Alloc-ID number is the same as the ONU-ID number (used in the PLOAM messages). It is used to carry PLOAM and OMCI traffic and, optionally, user traffic. If further

Alloc-ID values are needed for that ONU, they should be taken from those above 255. Also, the Alloc-ID = 254 is the Alloc-ID used to discover unknown ONUs, and the Alloc-ID = 255 is the unassigned Alloc-ID. This is used to indicate that no T-CONT can use the associated allocation structure.

The StartTime field contains the 16-bit number that indicates the starting time of the allocation.

For GPON this time is measured in bytes, starting with zero at the beginning of the upstream GTC frame. This limits the size of the upstream GTC frame to 65 536 bytes. This is sufficient to address up to 4.194 Gbit/s upstream rates.

The StartTime points to the beginning of the valid data transmission and does not include the PLOu field. This makes the meaning of the pointer the same regardless of its position in a group of contiguous allocations for the same ONU. The physical layer overhead time is defined to include the time required for tolerances (guard time), receiver recovery, signal level recovery, timing recovery, delimiter and the three ONU-specific fields as defined in clause 8.2.2. The values for the physical layer times vary based on the data rate of the upstream direction. The OLT and ONU should both be designed to accommodate the physical overhead time. It is the OLT's responsibility to devise the bandwidth map such that the physical layer overhead time is properly accounted for.

For a GPON, the BWmaps comprises a StartTime and a StopTime.

Note that the StartTime must point to a time that occurs in the upstream GTC frame. Hence, StartTime can have a minimum value of zero for all bit rates. The maximum value depends on bit rate as follows: the maximum StartTime value is 19438 for an upstream bit rate of 1244.16 Mbit/s and is 38878 for 2488.32 Mbit/s.

The StopTime field contains the 16-bit number that indicates the stopping time of the allocation.

For GPON, this time is measured in bytes, starting with zero at the beginning of the upstream GTC frame. The StopTime points to the last valid data byte associated with this allocation. Note that the StopTime must indicate a time that is within the frame in which the allocation began.For a XGS PON, the BWmaps comprises a StartTime similar to the StartTime of a GPON and a time duration, i.e. a length for the first T-CONT. Then, others T-CONT in the same ONU can omit the StartTime parameter.

### GTC framing sublayer

A GTC framing sublayer has three functionalities as follows:
- 1) Multiplexing and demultiplexing
- 2) Header creation and decoding
- 3) Internal routing function based on Alloc-ID

### 1) Multiplexing and demultiplexing

PLOAM and GTC payload sections are multiplexed into a downstream GTC frame per the specified frame format. In the upstream direction, each section is extracted from an upstream burst according to the BWmap corresponding to the upstream GTC frame to which the burst belongs. See clause 8 for the downstream and upstream GTC frame format specification.

### 2) Header creation and decoding

GTC frame header is created and is formatted in a downstream frame. Upstream burst header is decoded. Moreover, embedded OAM is performed.

### 3) Internal routing function based on Alloc-ID

Routing based on Alloc-ID is performed for data from/to the GEM TC adapter.

### Summary of the invention

The PON system are becoming more and more complex and as a consequence the bandwidth maps are also becoming more and more complex.

For example, number of T-CONT and ONU to be considered by the OLT are increasing and the efficient and performant reallocation of the upstream transmission opportunities is becoming more and more challenging.

For example:
- some T-CONT may have priority over others,
- the OLT can give grants several times per frame to a same T-CONT,
- the OLT can give a grant at a specific time for a T-CONT.

Thus, it becomes more and more difficult to optimize the bandwidths.

Ideas and advantages behind the invention are:
- collecting and streaming the headers of a downstream frame as a standard data output on the ONU, which allows continuous capture and investigation using computers. In addition, there is no limit on the amount of capture.
- Use the headers collected to investigate transient states of the PON (for example: adding a new ONU, spike in traffic, sudden decrease in traffic, bursty traffic)

### Method

The following method applied to any passive optical network.

An example is described for a G-PON but the invention is not restricted to this specific passive optical network.

The proposal is to use generic equipment: an ONU and a computer device to create a transport header sniffer. A new conventional pipe is added in the ONU chip to read, process (as it always does) and then transfer the headers to one of the ONU standard traffic outputs in real-time.

A computer plugged to the ONU reads the headers as data, and a software on the computer can then perform any number of processing on the data collected and read.

The processing is designed to be real-time but any number of post-processing are also possible on recordings of the data.

The disclosure proposes to add an option on the ONU, for example a software configuration option, to set this ONU in a special operation mode called a "golden ONU mode". This ONU adapted to operates in this special operation mode is called a "golden ONU".

In the golden ONU mode, the transport layer information, especially the framing sublayer information, is processed normally by the ONU.

Thus, an ONU of an optical distribution network - hereafter, the golden ONU - receives downstream frames send by the OLT to a plurality of ONUs of the ODN.

These downstream frames comprise downstream data packets. Each downstream data packet includes a layer-2 header comprising at least upstream transmission opportunities and corresponding Alloc-ID's.

Each corresponding Alloc-ID identifies a T-CONT of an ONU of the optical distribution network or of a segment of the optical distribution network.

Thus golden ONU receives all the upstream transmission opportunities granted by the OLT to the different ONUs of the optical distribution network or the segment.

The data packet can also comprises a layer-3 payload.

The upstream transmission opportunities comprises upstream bandwidth management information and/or dynamic bandwidth assignment. Indeed, the upstream opportunities granted by the OLT ("grants") are the result of the dynamic bandwidth assignment and may comprise upstream bandwidth management information (for example, a flag to request for a T-CONT to indicate its queue length).

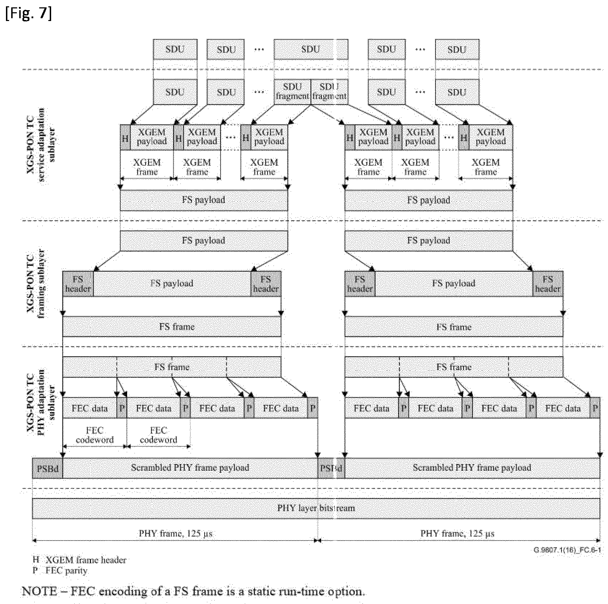

As an example, [Fig. 7] depicts a plurality of sublayers of a transmission convergence layer (GTC) in a XGS-PON. In this specific PON network, the FS header comprises the upstream transmission opportunities. Thus, in this specific PON network, the layer-2 header comprising at least upstream transmission opportunities and corresponding ONU-IDs is the FS header.

At [Fig. 7], the GTC is a whole layer comprising a plurality of sublayers. The framing (FS) sublayer is one of them. Thus, the GTC frame includes the FS frame, and in particular the FS header is the first part of the FS frame, and then it is also the last part of the GTC header.

For example, the upstream transmission opportunities comprises the bandwidth map above described and especially the Allocation ID field, the StartTime and the StopTime.

For example, the ONU-ID are Alloc-ID of the PON network.

In a G-PON network, the layer 2 is a transmission convergence layer comprising three sublayers:
- A service adaptation sublayer
- A framing sublayer
- A PHY adaptation sublayer;

The received layer-2 headers are then processed by a layer-3 processing unit of the ONU as layer-3 output payload. For example, they are processed by the Ethernet sublayer.

As a reminder, a PON is in downstream distributive and every ONU receives all the downstream packets, intended for all ONU's, but one ONU will only process the packets that are intended for him i.e. upon recognition in the layer 2 header of its own ONU-ID it will further process the layer 2 header at layer 2 level and process the payload. In addition, when an ONU does not recognize its own ONU-ID, it does nothing with the layer-2 header.Here, according to the golden ONU mode, after the downstream packet has been processed, instead of discarding the layer-2 header because the associated Alloc-ID is not its Alloc-ID, the golden ONU extracts at least part of the upstream transmission opportunities and their corresponding Alloc- IDs from the layer-2 headers.

Then, the golden ONU collects the at least part of the upstream transmission opportunities extracted from the layer-2 header and the extracted corresponding Alloc-ID.

Then, from this collect, the golden ONU can transfer the upstream transmission opportunities and their corresponding Alloc-IDs of the layer-2 headers through a dedicated routing to one of its output points.

For example, it can be encapsulated as Ethernet packet payload. In others words, the collected upstream transmission opportunities of the received layer-2 headers can be transmitted as an Ethernet packet.

In other words, the golden ONU transmits a layer-3 output payload comprising the layer-2 header of the downstream frame through a dedicated routine to one of its output points.

For example, the dedicated routine can comprises:
- after processing the received layer-2 headers, the golden ONU forwards the data packet of the layer-2 header comprising upstream transmission opportunities to a specific processing unit of the layer-3,
- the golden ONU wraps the data packet comprising to upstream transmission opportunities in a determined output format, for example as a Ethernet packet payload, and
- the golden ONU sends the data packet comprising to upstream transmission opportunities as a usual output payload.

This makes that the layer-2 header information is outputted by the golden ONU as a normal data stream, i.e. as a layer-3 output payload.

For example, it allows transmitting the layer-3 output payload to an user output port of the ONU for being further processed by e.g. a computer coupled to the ONU. Then, this computer coupled to the ONU allows reading the bandwidth maps granted by the OLT and then running checking routine of the upstream transmission opportunities collected. For example, a checking routine can comprise searching for mathematical errors in the upstream transmission opportunities collected.

A ONU has typically Ethernet ports to connect to the user network but it can also connect to devices according to other protocol than the Ethernet protocol. This ability is one of the advantage of method.

In an embodiment, the dedicated routine can comprise a step of storing the packet relative to upstream transmission opportunities in a memory of the golden ONU.

In an embodiment, the golden operation mode can comprise:
- encapsulating the layer-3 output payload as payload in an upstream packet and
- transmitting the upstream packet in the upstream direction over the optical distribution network to an optical line termination (OLT) for checking the layer-3 output payload at the OLT.

### Advantages

### Connected equipment

Thanks to the golden ONU and the golden operation mode, it is also possible to connect an equipment, for example a computer, to this standard data interface for real-time processing of the upstream transmission opportunities collected instead of being discarded.

Indeed, the method implemented in the golden operation mode is implemented for each downstream frame so at a nominal bit rate comprised between 120 µs and 130 µs.

Others advantage of the method are listed hereafter:
- this allows capturing during transitional states of the PON and to record bandwidth maps during the whole event;
- this is a very generic and relatively inexpensive equipment (it is simply an ONU);
- the processing of the data can be programmed on a standard computer with a lot of flexibility, with any programming language.

One of the possible post-processing is to read the upstream transmission opportunities (bandwidth maps generated by the DBA and BWM) comprised in a layer-3 output payload and check the upstream transmission opportunities e.g. upon mathematical errors in real time.

Thanks to the invention, it is possible to analyze and debug the behavior of embedded code on the OLT, i.e. the bandwidth allocation code or the transmission protocol, when running on boards.

For example, it is possible, for any receiver device to :
- receives packets relative to upstream transmission opportunities collected in a determined number of downstream frames at the ONU covering a determined amount of time,
- read the bandwidth maps of the ONU for the determined amount of time,
- analyzing the received bandwidth maps.

Then, it is possible to detect errors in the bandwidth maps.

It is also possible to transmit the upstream transmission opportunities in the upstream direction over the PON to the OLT for being checked at the OLT e.g. against available data at the OLT.

### When the ONU is part of a mobile network deployment

In an embodiment, the PON network is used to transport delay sensitive mobile data.

At one of the end user ports of an ONU a mobile station might be coupled to. The mobile station reports its required upstream mobile bandwidth. Different ways are existing in the prior art e.g. either from the mobile station towards the mobile core in the network (over the PON) according to the mobile protocol. This bandwidth requirement is provided by the mobile core towards the OLT which uses the information to calculate the appropriate "upstream transmission opportunities" for the end user point of the ONU.

In other words, the upstream transmission opportunities define target bandwidth allocated to the mobile antenna at a time point for each frame in real time.

Then, the required upstream mobile bandwidth and the upstream transmission opportunities can be checked/compared against each other.

Thus, it is possible to compare the target bandwidth allocated to the mobile antenna to a required bandwidth for the mobile antenna at the timepoint for each frame in real time.

### At the golden ONU level

It also possible to utilize directly at the golden ONU, the upstream transmission opportunities extracted as explained.

The golden ONU can use them to read the bandwidth maps granted by the OLT according to the upstream transmission opportunities extracted.

Then, the golden ONU can run a checking routine on the upstream transmission opportunities collected.

Preferably, the checking routine at least comprises searching for mathematical errors in the upstream transmission opportunities collected.

For example, it is possible to run basic or advanced checks on the upstream transmission opportunities collected, for example sanity checks.

A sanity check can consisting in checking that no grants are overlapping, or that no grant extends beyond the time boundaries of a frame.

### Activation Alloc-ID

The golden operation mode implemented by the golden ONU can benefits from the fact that one of the received data packet comprises a activation Alloc-ID.

The downstream data packet comprising a activation Alloc-ID can be created and sent by the OLT for example.

As a reminder, if the ONU-ID are Alloc-ID of a PON network, they should be taken from those above 255. Also, the Alloc-ID = 254 is the Alloc-ID used to discover unknown ONUs, and the Alloc-ID = 255 is the unassigned Alloc-ID. This is used to indicate that no T-CONT can use the associated allocation structure.

Therefore, the activation Alloc-ID can be set at 255 for example. However, any Alloc-ID not present on the PON can be used, all the ONUs on the PON will simply ignore about this entry as usual.

Then, the golden operation mode can further comprises determining that an Alloc-ID comprised in a layer-2 header is a activation Alloc-ID and send the upstream transmission opportunities as a layer-3 output payload to the OLT.

By doing so, it is easier to collect the transmission opportunities as they are in a frame comprising a same, unique and dedicated header relative to the activation Alloc-ID.

Here, the OLT received the extracted upstream transmission opportunities but any receiver device can be used. For example, a received device part of the optical distribution network can be used. Thus, the transmission opportunities collected are better and faster received.

Another potential use of a activation Alloc-ID would be to stream an interval value of the OLT relative to the BWmaps, i.e. any information or parameter relative to the BWmaps set by the OLT, that changes at the frame rate and thus cannot be recorded on the OLT itself. This is why, by implementing this activation Alloc-ID mechanism, this information is published on the PON and in particular on the golden ONU. So, this information can be observed and collected by the golden ONU, and then any processing/recording can be done to capture the evolution of this internal value relative to the BWmaps.

### Apparatus

Figure 8 is a block diagram depicting the apparatus 1200 operating in accordance with an example embodiment described above, i.e. implementing the example embodiment. The apparatus 1200 may be, for example, an electronic device such as a chip, chipset, an electronic device or an access network controller. The apparatus 1200 includes a processor 1110 and a memory 1160. In other examples, the apparatus 1200 may comprise multiple processors.

In the example of Figure 8, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 1200 according to the different embodiments explained above. In other examples, the apparatus 1200 may comprise more than one memory 1160 or different kinds of storage devices.

Computer program instructions 1120 for enabling implementations of example embodiments of the invention or a part of such computer program instructions may be loaded onto the apparatus 1200 by the manufacturer of the apparatus 1200, by a user of the apparatus 1200, or by the apparatus 1200 itself based on a download program, or the instructions can be pushed to the apparatus 1200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CDROM), a Digital Versatile Disk (DVD) or a Blu-ray disk, a USB-KEY or from the OLT.

According to an example embodiment, the apparatus 1200 comprises means, wherein the means comprises at least one processor 1110, at least one memory 1160 including computer program code 1120, the at least one memory 1160 and the computer program code 1120 configured to, with the at least one processor 1110, cause the performance of the apparatus 1200.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with an example of a computer described and depicted in Figure 8. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. A method for collecting data, the method comprising, at an ONU of an optical distribution network:
receiving downstream data packets in a downstream frame,
each downstream data packet including a layer-2 header comprising at least upstream transmission opportunities and corresponding Alloc-ID's,
wherein each Alloc-ID identifies a T-CONT of an ONU of the optical distribution network,
wherein the upstream transmission opportunities define upstream bandwidth allocation for the T-CONT of the ONU;
extracting at least part of the upstream transmission opportunities and their corresponding Alloc- IDs from the layer-2 headers; the method **characterized by** collecting the at least part of the upstream transmission opportunities and the corresponding Alloc-ID for transmission as a layer-3 output payload.

2. A method according to claim 1, wherein the steps of claim 1 are executed periodically at a time period comprised between 120 µs and 130 µs.

3. A method according to any of the preceding claims, further comprising a step of :
- transmitting the layer-3 output payload to a user output port of the ONU for being further processed e.g. by a computer coupled to the ONU.

4. A method according to any of the preceding claims, wherein the layer-3 output payload is an Ethernet packet payload.

5. A method according to any of the preceding claims, wherein the optical distribution network is a G-PON, for example an XGS-PON and the layer-2 is a transmission convergence layer.

6. A method according to any of the preceding claims, further comprising determining that an Alloc-ID comprised in a layer-2 header is an activation Alloc-ID and send the upstream transmission opportunities as a layer-3 output payload to an OLT of the optical distribution network.

7. A method according to any of the preceding claims, further comprising a step of storing the layer-3 output payload in a memory of the ONU.

8. A method according to any of the preceding claims, further comprising:
running a checking routine on the upstream transmission opportunities collected, wherein the checking routine at least comprises searching for mathematical errors in the upstream transmission opportunities collected.

9. A method according to any of the preceding claims, wherein the optical distribution network is part of a mobile network, wherein the upstream transmission opportunities define target bandwidth allocated to a mobile antenna at a time point, the method further comprising:
- comparing the target bandwidth allocated to the mobile antenna to a required bandwidth for the mobile antenna at the timepoint.

10. A method according to any of the preceding claims, further comprising:
- encapsulating the layer-3 output payload as payload in an upstream packet and
- transmitting the upstream packet in the upstream direction over the optical distribution network to an optical line termination (OLT) for checking the layer-3 output payload at the OLT.

11. Network element for an optical distribution network, the network element comprising means for:
receiving downstream data packets in a downstream frame, each downstream data packet including a layer-2 header comprising at least upstream transmission opportunities and corresponding Alloc-ID's, wherein each Alloc-ID identifies a T-CONT of an ONU of the optical distribution network, wherein the upstream transmission opportunities define upstream bandwidth allocation for the T-CONT of the ONU;
extracting at least part of the upstream transmission opportunities and their corresponding Alloc- ID from the layer-2 headers; the network element is **characterized in that** it comprises means for collecting the at least part of the upstream transmission opportunities and the corresponding Alloc-ID for transmission as a layer-3 output payload.

12. Network element according to the preceding claim, further comprising means for storing the layer-3 output payload in a memory of the network element.

13. Network element according to any of the claims 11 to 12, further comprising means for:
transmitting the layer-3 output payload to a user output port of the network element for being further processed e.g. by a computer coupled to the network element.

14. Network element according to any of the claims 11 to 13, further comprising means for:
encapsulating the layer-3 output payload as payload in an upstream packet and
transmitting the upstream packet in the upstream direction over the optical distribution network to an optical line termination (OLT) for checking the layer-3 output payload at the OLT.

15. Network element according to any of the claims 11 to 14, wherein the optical distribution network is part of a mobile network, wherein the upstream transmission opportunities define target bandwidth allocated to a mobile antenna at a time point, the network element further comprising means for comparing the target bandwidth allocated to the mobile antenna to a required bandwidth for the mobile antenna at the time point.

## Patentansprüche

1. Verfahren zum Sammeln von Daten, wobei das Verfahren an einer ONU eines optischen Verteilungsnetzes umfasst:
Empfangen von Downstream-Datenpaketen in einem Downstream-Rahmen,
wobei jedes Downstream-Datenpaket einen Schicht-2-Header umfasst, der mindestens Upstream-Übertragungsmöglichkeiten und entsprechende Alloc-IDs enthält,
wobei jede Alloc-ID einen T-CONT einer ONU des optischen Verteilungsnetzes identifiziert,
wobei die Upstream-Übertragungsmöglichkeiten eine Upstream-Bandbreitenzuweisung für den T-CONT der ONU definieren;
Extrahieren mindestens eines Teils der Upstream-Übertragungsmöglichkeiten und ihrer entsprechenden Alloc-IDs aus den Schicht-2-Headern;
wobei das Verfahren **dadurch gekennzeichnet ist, dass**
mindestens ein Teil der Upstream-Übertragungsmöglichkeiten und die entsprechende Alloc-ID zur Übertragung als Schicht-3-Ausgangsnutzlast gesammelt werden.

2. Verfahren nach Anspruch 1, wobei die Schritte des Anspruchs 1 periodisch in einem Zeitraum zwischen 120 µs und 130 µs ausgeführt werden.

3. Verfahren nach einem der vorhergehenden Ansprüche, ferner umfassend einen Schritt des:
- Übertragens der Schicht-3-Ausgangsnutzlast an einen Benutzerausgangsport der ONU zur weiteren Verarbeitung, z. B. durch einen mit der ONU gekoppelten Computer.

4. Verfahren nach einem der vorhergehenden Ansprüche, wobei die Schicht-3-Ausgangsnutzlast eine Ethernet-Paketnutzlast ist.

5. Verfahren nach einem der vorhergehenden Ansprüche, wobei das optische Verteilungsnetz ein G-PON ist, beispielsweise ein XGS-PON, und die Schicht 2 eine Übertragungskonvergenzschicht ist.

6. Verfahren nach einem der vorhergehenden Ansprüche, ferner umfassend das Bestimmen, dass eine in einem Schicht-2-Header enthaltene Alloc-ID eine Aktivierungs-Alloc-ID ist, und das Senden der Upstream-Übertragungsmöglichkeiten als Schicht-3-Ausgangsnutzlast an einen OLT des optischen Verteilungsnetzes.

7. Verfahren nach einem der vorhergehenden Ansprüche, ferner umfassend einen Schritt des Speicherns der Schicht-3-Ausgangsnutzlast in einem Speicher der ONU.

8. Verfahren nach einem der vorhergehenden Ansprüche, ferner umfassend:
Ausführen einer Prüfroutine an den gesammelten Upstream-Übertragungsmöglichkeiten,
wobei die Prüfroutine mindestens das Suchen nach mathematischen Fehlern in den gesammelten Upstream-Übertragungsmöglichkeiten umfasst.

9. Verfahren nach einem der vorhergehenden Ansprüche, wobei das optische Verteilungsnetz Teil eines Mobilfunknetzes ist, wobei die Upstream-Übertragungsmöglichkeiten eine einer Mobilfunkantenne zu einem Zeitpunkt zugewiesene Zielbandbreite definieren,
wobei das Verfahren ferner umfasst:
- Vergleichen der der Mobilfunkantenne zugewiesenen Zielbandbreite mit einer für die Mobilfunkantenne zu dem Zeitpunkt erforderlichen Bandbreite.

10. Verfahren nach einem der vorhergehenden Ansprüche, ferner umfassend:
- Einkapseln der Schicht-3-Ausgangsnutzlast als Nutzlast in ein Upstream-Paket und
- Übertragen des Upstream-Pakets in Upstream-Richtung über das optische Verteilungsnetz an eine optische Leitungsabschlusseinrichtung (OLT) zur Überprüfung der Schicht-3-Ausgangsnutzlast am OLT.

11. Netzelement für ein optisches Verteilungsnetz, wobei das Netzelement Mittel umfasst zum:
Empfangen von Downstream-Datenpaketen in einem Downstream-Rahmen, wobei jedes Downstream-Datenpaket einen Schicht-2-Header umfasst, der mindestens Upstream-Übertragungsmöglichkeiten und entsprechende Alloc-IDs enthält, wobei jede Alloc-ID einen T-CONT einer ONU des optischen Verteilungsnetzes identifiziert, wobei die Upstream-Übertragungsmöglichkeiten eine Upstream-Bandbreitenzuweisung für den T-CONT der ONU definieren;
Extrahieren mindestens eines Teils der Upstream-Übertragungsmöglichkeiten und ihrer entsprechenden Alloc-ID aus den Schicht-2-Headern;
wobei das Netzelement **dadurch gekennzeichnet ist, dass** es Mittel umfasst zum
Sammeln mindestens eines Teils der Upstream-Übertragungsmöglichkeiten und der entsprechenden Alloc-ID zur Übertragung als Schicht-3-Ausgangsnutzlast.

12. Netzelement nach dem vorhergehenden Anspruch, ferner umfassend Mittel zum Speichern der Schicht-3-Ausgangsnutzlast in einem Speicher des Netzelements.

13. Netzelement nach einem der Ansprüche 11 bis 12, ferner umfassend Mittel zum:
Übertragen der Schicht-3-Ausgangsnutzlast an einen Benutzerausgangsport des Netzelements zur weiteren Verarbeitung, z. B. durch einen mit dem Netzelement gekoppelten Computer.

14. Netzelement nach einem der Ansprüche 11 bis 13, ferner umfassend Mittel zum:
Einkapseln der Schicht-3-Ausgangsnutzlast als Nutzlast in ein Upstream-Paket und
Übertragen des Upstream-Pakets in Upstream-Richtung über das optische Verteilungsnetz an eine optische Leitungsabschlusseinrichtung (OLT) zur Überprüfung der Schicht-3-Ausgangsnutzlast am OLT.

15. Netzelement nach einem der Ansprüche 11 bis 14, wobei das optische Verteilungsnetz Teil eines Mobilfunknetzes ist, wobei die Upstream-Übertragungsmöglichkeiten eine einer Mobilfunkantenne zu einem Zeitpunkt zugewiesene Zielbandbreite definieren,
wobei das Netzelement ferner Mittel umfasst zum Vergleichen der der Mobilfunkantenne zugewiesenen Zielbandbreite mit einer für die Mobilfunkantenne zu dem Zeitpunkt erforderlichen Bandbreite.

## Revendications

1. Procédé de collecte de données, le procédé comprenant, au niveau d'une ONU d'un réseau de distribution optique :
la réception de paquets de données descendantes dans une trame descendante,
chaque paquet de données descendantes incluant un en-tête de couche 2 comprenant au moins des opportunités de transmission montantes et des Alloc-ID correspondants,
dans lequel chaque Alloc-ID identifie un T-CONT d'une ONU du réseau de distribution optique,
dans lequel les opportunités de transmission montantes définissent une allocation de bande passante montante pour le T-CONT de l'ONU ;
l'extraction d'au moins une partie des opportunités de transmission montantes et de leurs Alloc-ID correspondants à partir des en-têtes de couche 2 ;
le procédé étant **caractérisé par**
la collecte d'au moins une partie des opportunités de transmission montantes et de l'Alloc-ID correspondant pour transmission en tant que charge utile de sortie de couche 3.

2. Procédé selon la revendication 1, dans lequel les étapes de la revendication 1 sont exécutées périodiquement à une période de temps comprise entre 120 µs et 130 µs.

3. Procédé selon l'une quelconque des revendications précédentes, comprenant en outre une étape de :
- transmission de la charge utile de sortie de couche 3 vers un port de sortie utilisateur de l'ONU pour être davantage traitée, par exemple par un ordinateur couplé à l'ONU.

4. Procédé selon l'une quelconque des revendications précédentes, dans lequel la charge utile de sortie de couche 3 est une charge utile de paquet Ethernet.

5. Procédé selon l'une quelconque des revendications précédentes, dans lequel le réseau de distribution optique est un G-PON, par exemple un XGS-PON, et la couche 2 est une couche de convergence de transmission.

6. Procédé selon l'une quelconque des revendications précédentes, comprenant en outre la détermination qu'un Alloc-ID compris dans un en-tête de couche 2 est un Alloc-ID d'activation et l'envoi des opportunités de transmission montantes en tant que charge utile de sortie de couche 3 vers un OLT du réseau de distribution optique.

7. Procédé selon l'une quelconque des revendications précédentes, comprenant en outre une étape de stockage de la charge utile de sortie de couche 3 dans une mémoire de l'ONU.

8. Procédé selon l'une quelconque des revendications précédentes, comprenant en outre :
l'exécution d'une routine de vérification sur les opportunités de transmission montantes collectées,
dans lequel la routine de vérification comprend au moins la recherche d'erreurs mathématiques dans les opportunités de transmission montantes collectées.

9. Procédé selon l'une quelconque des revendications précédentes, dans lequel le réseau de distribution optique fait partie d'un réseau mobile, dans lequel les opportunités de transmission montantes définissent une bande passante cible allouée à une antenne mobile à un instant donné,
le procédé comprenant en outre :
- la comparaison de la bande passante cible allouée à l'antenne mobile à une bande passante requise pour l'antenne mobile à l'instant donné.

10. Procédé selon l'une quelconque des revendications précédentes, comprenant en outre :
- l'encapsulation de la charge utile de sortie de couche 3 en tant que charge utile dans un paquet montant et
- la transmission du paquet montant dans la direction montante sur le réseau de distribution optique vers un terminaison de ligne optique (OLT) pour vérification de la charge utile de sortie de couche 3 à l'OLT.

11. Élément de réseau pour un réseau de distribution optique, l'élément de réseau comprenant des moyens pour :
la réception de paquets de données descendantes dans une trame descendante, chaque paquet de données descendantes incluant un en-tête de couche 2 comprenant au moins des opportunités de transmission montantes et des Alloc-ID correspondants, dans lequel chaque Alloc-ID identifie un T-CONT d'une ONU du réseau de distribution optique, dans lequel les opportunités de transmission montantes définissent une allocation de bande passante montante pour le T-CONT de l'ONU ;
l'extraction d'au moins une partie des opportunités de transmission montantes et de leur Alloc-ID correspondant à partir des en-têtes de couche 2 ;
l'élément de réseau étant **caractérisé en ce qu'**il comprend des moyens pour
la collecte d'au moins une partie des opportunités de transmission montantes et de l'Alloc-ID correspondant pour transmission en tant que charge utile de sortie de couche 3.

12. Élément de réseau selon la revendication précédente, comprenant en outre des moyens pour le stockage de la charge utile de sortie de couche 3 dans une mémoire de l'élément de réseau.

13. Élément de réseau selon l'une quelconque des revendications 11 à 12, comprenant en outre des moyens pour :
la transmission de la charge utile de sortie de couche 3 vers un port de sortie utilisateur de l'élément de réseau pour être davantage traitée, par exemple par un ordinateur couplé à l'élément de réseau.

14. Élément de réseau selon l'une quelconque des revendications 11 à 13, comprenant en outre des moyens pour :
l'encapsulation de la charge utile de sortie de couche 3 en tant que charge utile dans un paquet montant et
la transmission du paquet montant dans la direction montante sur le réseau de distribution optique vers une terminaison de ligne optique (OLT) pour vérification de la charge utile de sortie de couche 3 à l'OLT.

15. Élément de réseau selon l'une quelconque des revendications 11 à 14, dans lequel le réseau de distribution optique fait partie d'un réseau mobile, dans lequel les opportunités de transmission montantes définissent une bande passante cible allouée à une antenne mobile à un instant donné,
l'élément de réseau comprenant en outre des moyens pour la comparaison de la bande passante cible allouée à l'antenne mobile à une bande passante requise pour l'antenne mobile à l'instant donné.
